# EUROPEAN PATENT SPECIFICATION

(11) **EP 1 947 306 B1**
(45) Date of publication and mention of the grant of the patent: **14.12.2011**
(21) Application number: 06811529.4
(22) Date of filing: 10.10.2006
(51) Int. Cl.: F01N 3/20, F01N 3/02, F01N 3/24, F02D 41/04, F02D 45/00, F01N 9/00

(54) **CONTROL UNIT FOR EXHAUST GAS PURIFYING APPARATUS**
STEUEREINHEIT FÜR EINE ABGASREINIGUNGSVORRICHTUNG
UNITE DE COMMANDE POUR APPAREIL DE PURIFICATION DE GAZ D'ECHAPPEMENT

(30) Priority: 12.10.2005 JP 2005297306
(43) Date of publication of application: 23.07.2008
(73) Proprietor: TOYOTA JIDOSHA KABUSHIKI KAISHA, Toyota-shi, Aichi-ken, 471-8571 (JP); KABUSHIKI KAISHA TOYOTA JIDOSHOKKI, Kariya-shi, Aichi 448-8671 (JP)
(72) Inventor: SUZUKI, Hisanobu, Aichi 471-8571 (JP); KAWAI, Kenji, Aichi 448-8671 (JP)
(74) Representative: Intès, Didier Gérard André
(86) International application number: PCT/JP2006/320217
(87) International publication number: WO 2007/043529

(56) References cited:
- EP-A1- 1 498 594
- WO-A1-2006/095917
- JP-A- 2003 343 314
- JP-A- 2005 036 662
- JP-A- 2005 036 662

## Description

### TECHNICAL FIELD

The present invention relates to a control unit of an exhaust gas purifying apparatus that purifies exhaust gas generated by an engine using a catalyst.

### BACKGROUND ART

An exhaust gas purifying apparatus that purifies exhaust gas caused by an internal combustion engine (hereinafter, referred to also as an engine) such as a diesel engine includes, for example, a NOx storage reduction catalyst and a particulate filter, which collects particulate matter (hereinafter, referred to as PM) from the exhaust gas.

The NOx storage reduction catalyst stores NOx if the content of oxygen in the exhaust gas is great and reduces NOx to NO₂ or NO and releases the substance if the content of oxygen in the exhaust gas is small and the amount of reducing agent (for example, unburned elements of fuel (HC)) is great. As the particulate filter (hereinafter, referred to as the filter), which collects PM, a DPF (diesel particulate filter) or a DPNR (diesel particulate-NOx reduction system) catalyst is employed.

The exhaust gas purifying apparatus, which includes the NOx storage reduction catalyst and the filter arranged in an exhaust passage, involves various types of control (hereinafter, referred to generally as catalyst control) including NOx reduction control, sulfur release control, and PM elimination control.

In the NOx reduction control, which is one type of the catalyst control, for example, fuel is fed to the NOx storage reduction catalyst. NOx stored in the catalyst is thus caused to react with the fuel elements (HC) and reduced through such reaction.

In the sulfur release control, the NOx storage reduction catalyst is recovered from sulfur poisoning by desorbing SOx from the NOx storage reduction catalyst. Specifically, to desorb sulfur elements from the NOx storage reduction catalyst, it is effective to expose the NOx storage reduction catalyst in the atmosphere in which the air-fuel ratio is slightly richer than the stoichiometric air-fuel ratio after the catalyst has been heated to a predetermined temperature (for example, 600 to 700°C). Thus, in this regard, fuel is supplied to the catalyst after the catalyst has been heated through, for example, switching of combustion states of the engine. In this manner, the fuel is exposed to the atmosphere of a rich air-fuel ratio, and the sulfur components are desorbed from the catalyst. Also, the sulfur release control may involve supply of fuel to the catalyst to increase the temperature of the catalyst.

In the PM elimination control, the temperature of the catalyst (catalyst bed temperature) is raised by, for example, regulating the combustion state of the engine. This promotes oxidization (burning) of the PM deposited on the catalyst such as a DPNR catalyst. Specifically, to burn and remove the PM from the catalyst according to the PM elimination control, it is necessary to increase the temperature of the catalyst to a predetermined temperature (which is, for example, approximately 600 to 700°C). Thus, there are cases in which the PM elimination control involves supply of fuel to the catalyst.

As a type of diesel engine, there is a V type multicylinder engine that includes left and right banks each having a plurality of cylinders. The sets of the cylinders, each of which forms the corresponding one of the banks, are connected to exhaust passages of different systems. The V type multicylinder engine includes an intake manifold, or a portion of an intake passage, which is provided commonly for the left and right banks to maintain the amounts of the intake air supplied to the banks at equal levels. This type of engine also performs the PM elimination control, the sulfur release control, and the NOx reduction control, which have been described so far, in response to a request for the catalyst control.

Patent Document 1, which,is listed below, describes a method as a technique related to the catalyst control of the V type multicylinder engine. The technique of Patent Document 1 performs control in such a manner as to suppress variation of flow rates of exhaust gas between multiple cylinders. This prevents delay in recovery of exhaust gas purifying performance and wasteful consumption of energy.

In the V type multicylinder engine, the flow rates of the exhaust gas flowing to the catalysts of the systems of the left and right banks may vary between the systems due to a difference (which is, for example, varied sizes of fine pores defined in the catalysts, varied flow characteristics, and varied performances of turbochargers) between the systems. Such variation of the exhaust gas flow rates varies the speeds of deterioration of the catalysts depending on the deposit amount of PM and the degree of sulfur poisoning between the left and right systems. As a result, recovery of the catalyst, or the catalyst control, is requested at different timings between the left and right banks. In this case, if the catalyst control is requested only for one of the systems, it is impossible to switch the combustion state of the bank of the system requesting such control separately from the other system. Specifically, as has been described, the intake manifold, which forms a portion of the intake passage, of the V type diesel engine is provided commonly for the banks in order to maintain the intake air amounts of the banks at equal levels. This makes it impossible to switch the combustion state of one of the banks independently from the other through air-fuel ratio control (rich control) performed by adjusting a throttle valve (an intake air throttle valve).

In other words, if the catalyst control is requested for one of the left and right banks, the combustion state of the engine needs to be switched despite the fact that the recovery is not requested for the other bank. Specifically, the PM elimination control and the sulfur release control each involve PM elimination combustion and sulfur release combustion. This increases the fuel consumption. Thus, if the PM elimination/sulfur release combustion is carried out to recover the catalyst of the system that requests the catalyst control every time such request is generated, the recovery is performed for repeated times and the fuel consumption is increased.
Document WO 2006/095917 A1, which may be considered as comprised in the state of the art only pursuant to article 54(3) EPC, discloses another exhaust gas purifying apparatus.
Patent Document 1: Japanese Laid-Open Patent Publication No. 2005-036663

### SUMMARY OF THE INVENTION

Accordingly, it is an objective of the present invention to provide a control unit that suppresses increase of fuel consumption caused by PM elimination and sulfur release of an exhaust gas purifying apparatus in which different exhaust systems are connected to a plurality of sets of cylinders of an engine and an exhaust gas purifying catalyst is provided in each of the exhaust systems.

To achieve the foregoing objective, the present invention provides a control unit of an exhaust gas purifying apparatus used in an internal combustion engine having a plurality of sets of cylinders. Different exhaust systems are each connected to one of the sets of the cylinders, and the exhaust gas purifying apparatus includes catalysts each provided in one of the exhaust systems to purify exhaust gas. Regardless of the states of the catalysts, the control unit performs a common PM elimination control or a common sulfur release control on the catalysts and regardless of whether the combustion state of the engine is switched according to claim 1.

The present invention also provides a method for controlling an exhaust gas purifying apparatus used in an internal combustion engine having a plurality of sets of cylinders. Different exhaust systems are each connected to one of the sets of the cylinders. The method includes: purifying exhaust gas by means of catalysts each provided in one of the exhaust systems; and performing a common PM elimination control or a common sulfur release control on the catalysts regardless of the states of the catalysts and regardless of whether the combustion state of the engine is switched according to claim 5.

### BRIEF DESCRIPTION OF THE DRAWINGS

Fig. 1 is a schematic diagram showing one embodiment of the present invention;
Fig. 2 is a flowchart representing the content of PM elimination/sulfur release control executed by an ECU;
Fig. 3 is a flowchart representing the content of NOx reduction control performed hy the ECU;
Fig. 4 is a timing chart representing the energization duration, the requested number of multiple addition cycles, and the addition interval for addition of fuel;
Fig. 5 is a map representing a bed temperature correction coefficient; and
Fig. 6 is a schematic view showing an engine having four systems of exhaust passages.

### BEST MODE FOR CARRYING OUT THE INVENTION

One embodiment of the present invention will now be described with reference to the attached drawings.

### -Engine-

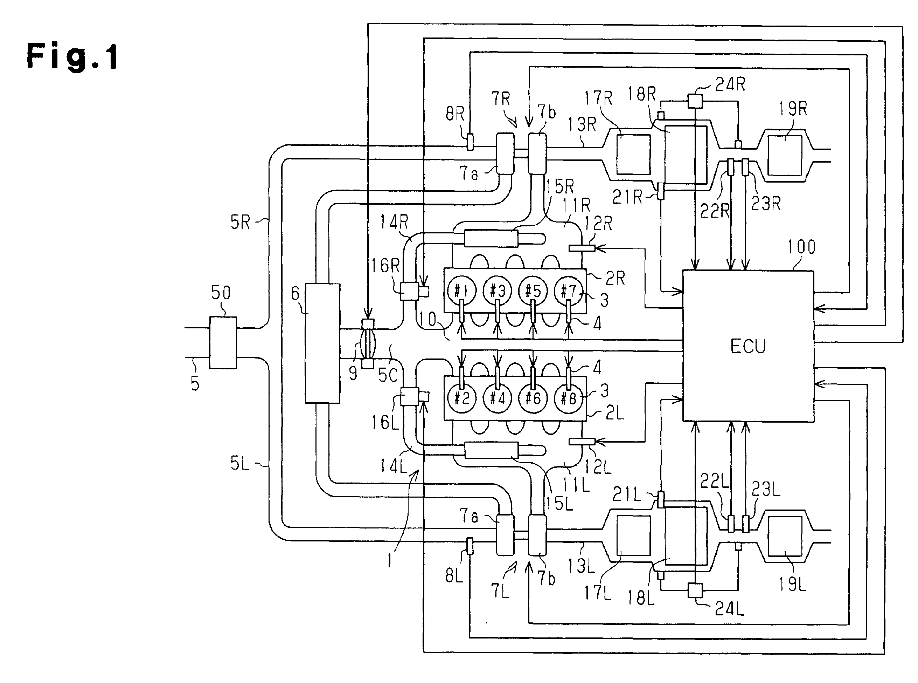

An example of an engine in which the present invention is employed will hereafter be explained with reference to Fig. 1.

In this example, an engine 1 is a V type eight cylinders diesel engine having a left bank 2L and a right bank 2R, each of which is configured by four cylinders 3. The banks 2L, 2R are arranged in a V shaped manner. The engine 1 includes injectors 4, each of which injects fuel directly into a combustion chamber of the corresponding one of the cylinders 3 (cylinders #1, #2, #3, #4, #5, #6, #7, #8). Each injector 4 is an electromagnetic on-off valve that opens when energized (supplied with voltage). The timings at which the injectors 4 become open are regulated by an ECU (electronic control unit) 100.

The engine 1 has an intake manifold commonly provided for the left and right banks 2L, 2R, and an exhaust manifold 11L and an exhaust manifold 11R, which are arranged for the left bank 2L and the right bank 2R, respectively. In the following description, the exhaust system of the left bank 2L may be referred to as a first system and the exhaust system of the right bank 2R may be referred to as a second system.

An intake passage 5 is connected to the engine 1 to introduce intake air to the cylinders 3. An air cleaner 50 is connected to the intake passage 5. The intake passage 5 is branched into a branch line 5L and a branch line 5R at a position downstream from the air cleaner 50. A compressor portion 7a of a turbocharger 7L and a compressor portion 7a of a turbocharger 7R are arranged in the branch line 5L and the branch line 5R, respectively. An intercooler 6 is connected to the branch lines 5L, 5R at a position downstream from the compressor portions 7a. The intercooler 6 is connected to the intake manifold 10 through a common intake passage 5C. An electronically controlled throttle valve (an intake air throttle valve) 9 is provided in the common intake passage 5C. EGR lines 14L, 14R, which will be explained later, are connected to the common intake passage 5C at a position downstream from the throttle valve 9. An air flow meter 8L is arranged in the branch line 5L at a position upstream from the compressor portion 7a of the turbocharger 7L. An air flow meter 8R is arranged in the branch line 5R at a position upstream from the compressor portion 7a of the turbocharger 7R.

A fuel adding valve 12L is arranged in the exhaust manifold 11L connected to the left bank 2L. A fuel adding valve 12R is connected to the exhaust manifold 11R connected to the right bank 2R. Each of the fuel adding valves 12L, 12R is an electromagnetic on-off valve that opens when energized (supplied with voltage) to add fuel to the exhaust system of the corresponding one of the left and right banks 2L, 2R. The timings at which each fuel adding valve 12L, 12R becomes open are regulated by the ECU 100.

An exhaust passage 13L and an exhaust passage 13R are connected to the exhaust manifold 11L and the exhaust manifold 11R, respectively. A turbine portion 7b of the turbocharger 7L is provided in the exhaust passage 13L. A turbine portion 7b of the turbocharger 7R is provided in the exhaust passage 13R. Each of the turbochargers 7L, 7R is a variable nozzle type turbocharger and has a variable nozzle vane mechanism at the side corresponding to the corresponding one of the turbine portions 7b. By adjusting the opening degree of the variable nozzle vane mechanism, charging pressure of the engine 1 is changed. The ECU 100 regulates the opening degree of the variable nozzle vane mechanism.

An EGR line 14L and an EGR line 14R connect the exhaust manifold 11L and the exhaust manifold 11R, respectively, to the common intake passage 5C. The EGR line 14L receives an EGR cooler 15L cooling EGR gas and an EGR valve 16L, which adjusts the flow rate of EGR. The EGR line 14R accommodates an EGR cooler 15R cooling the EGR gas and an EGR valve 16R adjusting the flow rate of EGR. The opening degree of each of the EGR valves 16L, 16R is adjusted by the ECU 100.

An NSR (NOx storage reduction) catalyst 17L, a DPNR catalyst 18L, and a sweeper 19L are arranged in the exhaust passage 13L at positions downstream from the turbocharger 7L. An NSR catalyst 17R, a DPNR catalyst 18R, and a sweeper 19R are arranged in the exhaust passage 13R at positions downstream from the turbocharger 7R.

Each of the NSR catalysts 17L, 17R is a NOx storage reduction catalyst formed by, for example, alumina (Al₂O₃) as a carrier supporting alkaline metal such as potassium (K), sodium (Na), lithium (Li), or cesium (Cs), alkaline earth such as barium (Ba) or calcium (Ca), rare earth such as lantern (La) and yttrium (Y), and precious metal such as platinum (Pt).

Each NSR catalyst 17L, 17R stores NOx if the content of oxygen in the exhaust gas is great and reduces NOx to NO₂ or NO, and releases the substance if the content of oxygen in the exhaust gas is small and the content of reducing agents (such as unburned components of fuel (HC)) is great. The NOx released as No₂ or NO is further reduced to N₂ through rapid reaction with HC or CO contained in the exhaust gas. Through reduction of NO₂ or NO, HC and CO are oxidized to H₂O or CO₂.

Each of the DPNR catalysts 18L, 18R is formed by, for example, a porous ceramic structure supporting a NOx storage reduction catalyst and collects PM from the exhaust gas as PM passes through a porous wall. If the air-fuel ratio of the exhaust gas is lean, NOx contained in the exhaust gas is stored by the NOx storage reduction catalyst. If the air-fuel ratio is rich, the stored NOx is reduced and released. Each DPNR catalyst 18L, 18R supports a catalyst (for example, an oxidation catalyst including precious metal such as platinum as a main component) that oxidizes and burns the collected PM. Each of the sweeper 19L, 19R is an oxidation catalyst and oxidizes HC and CO to purify the exhaust gas.

A first exhaust gas temperature sensor 21L is arranged between the NSR catalyst 17L and the DPNR catalyst 18L. A first exhaust gas temperature sensor 21R is provided between the NSR catalyst 17R and the DPNR catalyst 18R. A second exhaust gas temperature sensor 22L and an air-fuel ratio sensor 23L are provided downstream from the DPNR catalyst 18L. A second exhaust gas temperature sensor 22R and an air-fuel ratio sensor 23R are provided downstream from the DPNR catalyst 18R. A pressure difference sensor 24L detects the difference in pressure (upstream-downstream pressure difference) between the upstream side and the downstream side of the DPNR catalyst 18L. A pressure difference sensor 24R detects the difference in pressure (upstream-downstream pressure difference) between the upstream side and the downstream side of the DPNR catalyst 18R. Detection signals generated by the first exhaust gas temperature sensors 21L, 21R, the second exhaust gas temperature sensors 22L, 22R, the air-fuel ratio sensors 23L, 23R, and the pressure difference sensors 24L, 24R are input to the ECU 100.

### -ECU-

The ECU 100 includes a CPU, a ROM, a RAM, and a backup RAM. The ROM stores various control programs and maps, with reference to which the control programs are executed. The CPU performs calculation procedures in accordance with the control programs and the maps, which are stored in the ROM. The RAM is a memory that temporarily stores results of calculations by the CPU and data provided by the sensors. The backup memory is a non-volatile memory that stores data to be maintained after the engine 1 is stopped.

As illustrated in Fig. 1, the air flow meters 8L, 8R, the first exhaust gas temperature sensors 21L, 21R, the second exhaust gas temperature sensors 22L, 22R, the air-fuel ratio sensors 23L, 23R, the pressure difference sensors 24L, 24R, a coolant temperature sensor that detects the temperature of coolant of the engine 1, a crank position sensor that detects the speed of the engine 1, and various other sensors including an accelerator pedal position sensor are connected to the ECU 100. Based on the outputs provided by the above-listed sensors, the ECU 100 carries out various control procedures by controlling operations of the injectors 4, the throttle valve 9, the variable nozzle vane mechanisms of the turbochargers 7L, 7R, and the EGR valves 161, 16R. Also, the ECU 100 performs the following catalyst control.

### -Catalyst Control-

The ECU 100 performs PM elimination control, sulfur release control, and NOx reduction control. Specifically, in the PM elimination control, PM deposited on the DPNR catalysts 18L, 18R are oxidized. In the sulfur release control, the NOx storage reduction catalysts of the NSR catalysts 17L, 17R and the DPNR catalysts 18L, 18R are recovered from S poisoning. In the NOx reduction control, NOx stored in the NOx storage reduction catalysts of the NSR catalysts 17L, 17R and the DPNR catalysts 18L, 18R are reduced. In the following, the PM elimination control, the sulfur release control, and the NOx reduction control will be explained.

### [PM Elimination Determination]

The ECU 100 estimates the deposit amount of PM deposited on the DPNR catalysts 18L, 18R. In one method of such estimation, a map is defined from PM discharge amounts of the engine corresponding to the engine speed and the fuel injection amount, which are determined in advance through tests or the like. The PM deposit amount is estimated by integrating the PM discharge amounts of the engine, which is obtained with reference to the map.

In another method for estimating the PM deposit amount, the PM deposit amount is estimated based on an integrated value of the intake air amount. In this method, the PM deposit amount is estimated using one of the DPNR catalyst 18L, 18R exhibiting the greater PM deposit amount as a reference. This provides an estimated PM deposit amount corresponding to a greatest possible value, in order to prevent incomplete burning of the PM deposited on the DPNR catalysts 18L, 18R. Specifically, between the DPNR catalysts 18L, 18R, the catalyst representing a smaller value of the intake air amount (the greater PM deposit amount), which is determined based on detection signals of the air flow meters 8L, 8R arranged in the branch lines 5L, 5R of the intake passage 5, is used as the reference. The PM deposit amount is estimated by integrating the intake air amounts of the reference catalyst.

The ECU 100 determines that the DPNR catalysts 18L, 18R needs to be immediately recovered if the estimated PM amount exceeds a predetermined reference value (a threshold deposit amount). At this stage, the ECU 100 performs the PM elimination control, which will be explained later.

The ECU 100 monitors signals output by the pressure difference sensors 24L, 24R arranged in the first and second systems. The ECU 100 compares the upstream-downstream pressure differences of the DPNR catalysts 18L, 18R obtained from the output signals of the pressure difference sensors 24L, 24R with a predetermined threshold value. If the upstream-downstream pressure difference of either one of the DPNR catalysts 18L, 18R exceeds the threshold value before the estimated PM deposit amount reaches the reference value, the ECU 100 starts the PM elimination at this stage.

### [Sulfur Release Determination]

The ECU 100 estimates the S poisoning amounts of the NOx storage reduction catalysts of the NSR catalysts 17L, 17R and the DPNR catalysts 18L, 18R. In one method of such estimation, a map is defined from the S poisoning amounts corresponding to the engine speed and the fuel injection amount, which are determined in advance through tests or the like. The S poisoning amounts are estimated by integrating the S poisoning amount, which is obtained with reference to the map. The ECU 100 determines that recovery from S poisoning needs to be immediately performed if an estimated value of the S poisoning amount exceeds a predetermined value (a threshold estimation, amount). The ECU 100 then carries out the sulfur release control, which will be described later.

### [PM Elimination/Sulfur Release Control]

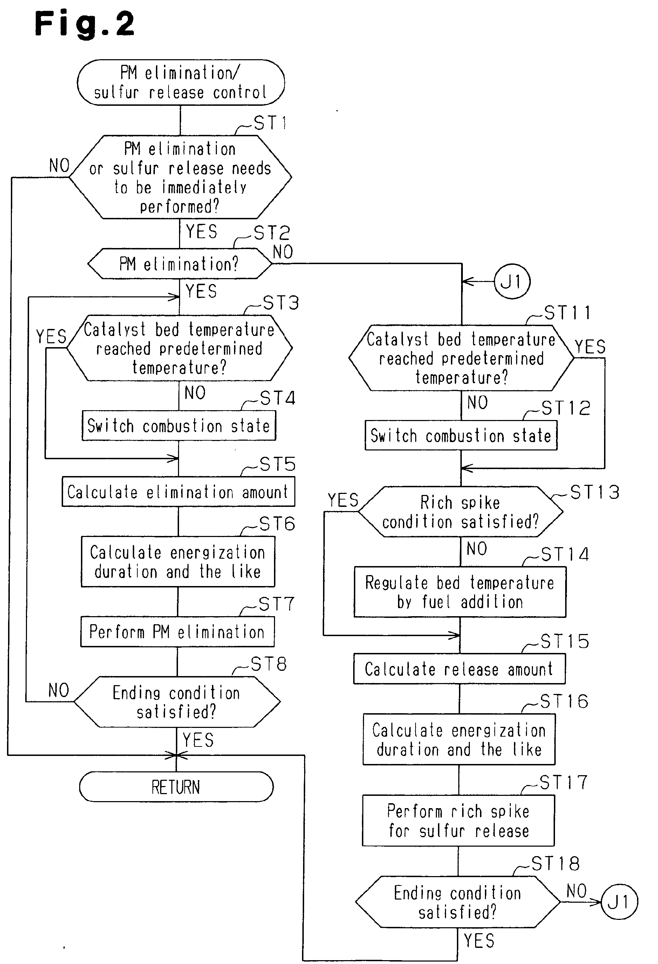

The PM elimination/sulfur release control, which is carried out by the ECU 100, will now be explained with reference to the flowchart of Fig. 2. The PM elimination/sulfur release control routine is performed repeatedly at predetermined intervals.

In step ST1, it is determined whether the PM elimination or the sulfur release needs to be immediately carried out using the above-described determination method. If the determination is negative, the routine is suspended. If positive determination is made in step ST1, it is determined whether the control that has been determined to need to be carried out corresponds to the "PM elimination control" in step ST2. If it is determined that the "PM elimination control" needs to be immediately performed, step ST3 is carried out. If the determination of step ST2 is negative, it is determined that the "sulfur release control" needs to be immediately carried out and step ST11 is performed.

In step ST3, the catalyst bed temperatures of the DPNR catalysts 18L, 18R are estimated using the output signals of the first exhaust gas temperature sensors 21L, 21R. It is then determined whether the lower value of these estimated catalyst bed temperatures corresponds to a temperature required for the PM elimination (which is, for example, approximately 350°C). If the determination of step ST3 is positive, it is determined that the PM elimination can be carried out smoothly. Step ST5 is then performed.

If the determination of step ST3 is negative, the combustion state of the engine 1 is switched (to a PM elimination combustion mode) in step ST4, in order to increase the catalyst bed temperatures. Step ST5 is then carried out. In the PM elimination combustion mode, a common control is performed for the first and second systems. To switch to the PM elimination combustion mode, the air-fuel ratio (A/F) may be decreased by reducing the intake air amount by means of the throttle valve 9. Alternatively, in combination with such method, the EGR amount may be increased or the fuel injection timings may be retarded.

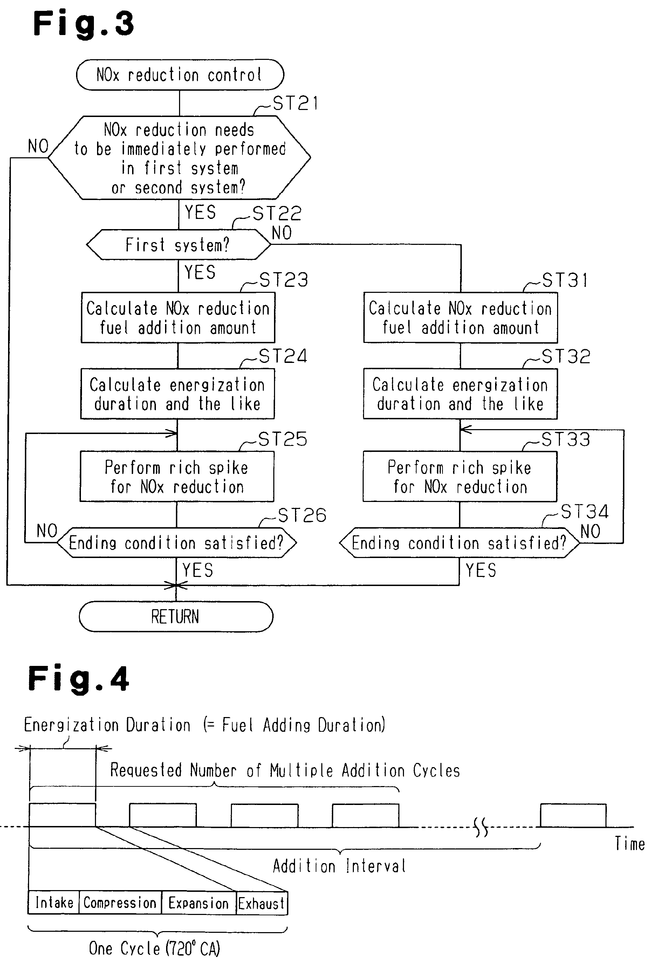

Next, in step ST5, a PM elimination amount is calculated. The PM elimination amount is obtained with reference to a map defined through tests and calculations using the catalyst bed temperatures and a PM oxidization speed as parameters. To prevent incomplete burning of the PM in the DPNR catalysts 18L, 18R, the PM elimination amount is determined using the estimated catalyst bed temperature value of one of the catalysts exhibiting the lower catalyst bed temperature, the DPNR catalyst 18L of the first system or the second DPNR catalyst 18R of the second system. A requested fuel addition amount is then obtained from the calculated PM elimination amount. Based on the requested fuel addition amount, energization durations (fuel adding durations) of the fuel adding valves 12L, 12R, a requested number of multiple addition cycles, and an addition interval (see Fig. 4) are determined (step ST6).

In step ST7, based on the energization duration, the requested number of multiple addition cycles, and the addition interval, which have been obtained in step ST6, operation of the fuel adding valve 12L of the first system and operation of the fuel adding valve 12R of the second system are controlled to carry out the common PM elimination. In other words, the common PM elimination control is carried out in the first and second systems.

In step ST8, it is determined whether a condition for ending the PM elimination control is satisfied in step ST8. Specifically, it is determined whether the amount of the fuel added since starting of the PM elimination control has reached the requested fuel addition amount. If the determination is positive, the fuel addition is ended and the routine is also suspended.

If the determination of step ST2 is negative and it is determined that the "sulfur release control" needs to be immediately carried out, the catalyst bed temperatures of the NSR catalysts 17L, 17R and the DPNR catalysts 18L, 18R are estimated based on the output signals of the first exhaust gas temperature sensors 21L, 21R in step ST11. It is then determined whether the lowest value of the estimated bed temperature values reaches a temperature required for the sulfur release (which is, for example, approximately 350°C). If such determination is positive, it is determined that the sulfur release should be carried out smoothly and step ST13 is performed.

If the determination of step ST11 is negative, the combustion state of the engine 1 is switched (to a sulfur release combustion mode) in step ST12, so as to raise the catalyst bed temperatures. Step ST13 is then carried out. In the sulfur release combustion mode, a common control is performed the first and second systems.

To switch to the sulfur release combustion mode, the air-fuel ratio (A/F) may be decreased by reducing the intake air amount by means of the throttle valve 9. Alternatively, in combination with such method, the EGR amount may be increased or the fuel injection timings may be retarded.

In step ST13, it is determined whether the catalyst bed temperatures of the NSR catalysts 17L, 17R and the DPNR catalysts 18L, 18R, which are estimated based on the output signals of the first exhaust gas temperature sensors 21L, 21R, and the air-fuel ratio obtained from the output signals of the air-fuel ratio sensors 23L, 23R satisfy a rich spike condition (fuel addition condition), based on which the recovery from S poisoning is carried out. If the determination of step ST13 is positive, step ST15 is performed. In step ST13, determination is performed using the lowest value of the estimated bed temperatures of the catalysts as the reference catalyst bed temperature. Further, the higher value of the air fuel-ratios of the first and second systems is employed as the air-fuel ratio in such determination.

If the determination of step ST13 is negative, fuel addition (opening of the fuel adding valves 12L, 12R) is carried out in step ST14 in order to adjust the catalyst bed temperatures. In this manner, the catalyst bed temperature is increased and the air-fuel ratio is enriched in such a manner as to satisfy the condition for carrying out the recovery from S poisoning. Step ST15 is then performed. The rich spike condition for permitting the recovery from S poisoning is, for example, that the catalyst bed temperature is 350°C or greater and the air-fuel ratio has reached 22.

Subsequently, in step ST15, a sulfur release amount is calculated. The sulfur release amount is obtained with reference to a map defined in advance through tests and calculations using the catalyst bed temperatures and an S poisoning reduction speed as parameters. To maximally suppress thermal deterioration of the catalysts and ensure sufficient sulfur release, the sulfur release amount is determined using an average value of the estimated catalyst bed temperature of the DPNR catalyst 18L of the first system and the estimated catalyst bed temperature of the DPNR catalyst 18R of the second system. Next, in step ST16, the requested fuel addition amount is determined based on the sulfur release amount obtained in step ST15. Based on the requested fuel addition amount, the energization duration (the fuel adding duration) of the fuel adding valves 12L, 12R, the requested number of multiple addition cycles, and the addition interval (see Fig. 4) are calculated.

In step S17, based on the energization duration, the requested number of multiple addition cycles, and the addition interval, which are calculated in step ST16, operation of the fuel adding valve 12L of the first system and operation of the fuel adding valve 12R of the second system are controlled in accordance with a common procedure. That is, the fuel is intermittently added to the exhaust gas by the fuel adding valves 12L, 12R at constant time intervals. In this manner, the sulfur release is executed by performing the rich spike, in which the exhaust gas in the vicinity of the NOx storage seduction catalysts is temporarily held in a state in which the oxygen content is small and the content of unburned fuel component is great. In other words, the common sulfur release control is performed in the first system and the second system.

It is then determined whether a condition for ending the sulfur release control is satisfied in step ST18. Specifically, it is determined whether the amount of the fuel added since starting of the sulfur release control has reached the requested fuel addition amount. If the determination is positive, the rich spike is ended and the routine is also suspended.

If the PM elimination and the sulfur release both need to be immediately carried out in the above-described PM elimination/sulfur release control, the PM elimination control, for example, is performed by priority.

As has been described, according to the PM elimination/sulfur release control of this example, regardless of the states of the NSR catalysts 17L, 17R and the DPNR catalysts 18L, 18R of the first and second systems, the common control is performed for the PM elimination combustion or the sulfur release combustion is carried out for both of the first and second systems. This reduces the number of recovery cycles compared to a case in which the PM elimination/sulfur release control is performed each time the catalyst control is requested for the catalyst of the first system or the second system. The fuel consumption is thus prevented from increasing due to the PM elimination/sulfur release.

Further, the PM elimination is performed using the catalyst exhibiting the lower catalyst bed temperature (the greater PM deposit amount) of the DPNR catalysts 18L, 18R of the systems as the reference. The PM is thus completely burred on both DPNR catalysts 18L, 18R, preventing incomplete burning of PM. Also, the sulfur release is performed using the average value of the catalyst bed temperatures of the multiple catalysts (the NSR catalysts 17L, 17R and the DPNR catalysts 18L, 18R) of the first and second systems as the reference, to suppress thermal deterioration of the catalysts and ensure effective release of sulfur. This minimizes the thermal deterioration of each catalyst and allows sufficient release of sulfur.

Also, as has been described, the PM elimination is performed using the catalyst exhibiting the lowest catalyst bed temperature as the reference. The sulfur release is carried out using the average of the catalyst bed temperatures of the catalysts. In this manner, the common control is performed for the fuel addition for the PM elimination/sulfur release is carried out in both systems in. This further suppresses increase of the fuel consumption caused by the PM elimination/sulfur release.

### [NOx Reduction Control]

In diesel engines, the air-fuel ratio of exhaust gas is lean in most of the operating ranges. Thus, in a normal operating state, the content of oxygen is great in the atmosphere around the NSR catalysts 17L, 17R and the DPNR catalysts 18L, 18R. This causes the NOx storage reduction catalysts of the NSR catalysts 17L, 17R and the DPNR catalysts 18L, 18R to store NOx of the exhaust gals. However, since the oxygen content in the atmosphere around the catalysts hardly becomes small, the stored NOx cannot be reduced easily. The NOx storage reduction performance of each NOx storage reduction catalyst thus easily reaches a saturated level.

To solve this problem, in this example, fuel is supplied to the NOx storage reduction catalysts, including those of the DPNR catalysts, to adjust the air-fuel ratio of the exhaust gas. In this manner, the temperature in the atmosphere around each catalyst is raised or such atmosphere is switched to a reductive atmosphere. This reduces the NOx stored in the NOx storage reduction catalysts to N₂, CO₂, and H₂O and releases the substance. A specific example will hereafter be explained with reference to the flowchart of Fig. 3. The NOx reduction control of Fig. 3 is performed by the ECU 100. The NOx reduction routine is carried out repeatedly at certain time intervals.

In step ST21, it is determined whether NOx reduction needs to be immediately carried out for the first system or the second system. If the determination is negative, the routine is suspended. If the determination of step ST21 is positive, step ST22 is performed.

Such determination is carried out by, for example, estimating the NOx storage amounts of the NSR catalysts 17L, 17R and the DPNR catalysts 18L, 18R of both systems. Specifically, if an estimated NOx storage amount exceeds a predetermined reference value (a threshold estimated amount), it is determined that the NOx reduction needs to be immediately performed. In one method for estimating the NOx storage amounts, a map is defined from the NOx storage amounts corresponding to the engine speed and the fuel injection amount, which are determined in advance through tests or the like. The NOx storage amounts are then estimated by integrating the NOx storage amount, which is obtained with reference to the map.

In step ST22, it is determined whether the system for which the NOx reduction needs to be immediately performed corresponds to "the first system". If the determination is positive, step ST23 is performed. If the determination of step ST22 is negative, it is determined that the NOx reduction needs to be immediately carried out in "the second system". In this case, step ST31 follows.

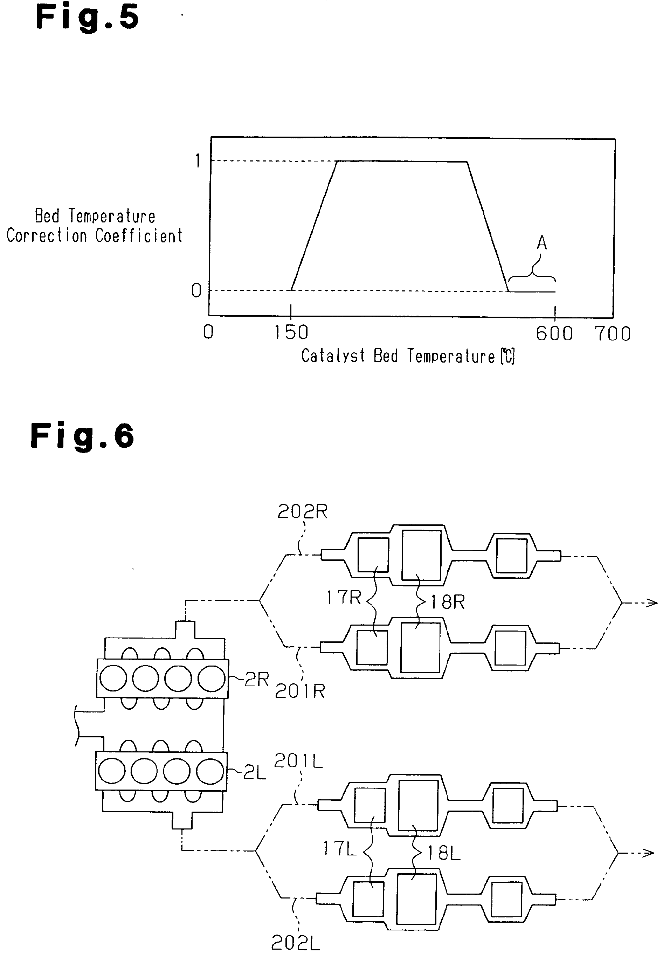

In step ST23, a NOx reduction basic fuel addition amount is calculated based on the difference between the actual fuel-air ratio, which is obtained using the detection signal of the air-fuel ratio sensor 23L of the first system, and a target air-fuel ratio. The NOx reduction basic fuel addition amount is then multiplied by a bed temperature correction coefficient to obtain a NOx reduction fuel addition amount, with which the NOx reduction control is performed. The bed temperature correction coefficient is determined with reference to the bed temperature correction coefficient map shown in Fig. 5, using the lower value of the catalyst bed temperatures of the NSR catalysts 17L and the DPNR catalyst 18L, which are estimated from the detection signal of the first exhaust gas temperature sensor 21L of the first system. The bed temperature correction coefficient map of Fig. 5 is made while taking into consideration the fact that, if fuel addition is carried out when the catalyst bed temperature is 200°C or below, the NOx reduction performance of the catalyst remains low and thus HC may pass through the catalyst. Further, in range A in which the catalyst bed temperature is close to 600°C, the NOx reduction performance is low and the fuel consumption is increased by the fuel addition. Thus, in the range A, the bed temperature correction coefficient is set to "zero".

In step ST24, the energization duration (the fuel adding duration) of the fuel adding valve 12L of the first system, the requested number of multiple addition cycles, and the addition interval (see Fig. 4) are calculated based on the NOx reduction fuel addition amount obtained in step ST23. In step ST25, operation of the fuel adding valve 12L of the first system is controlled in accordance with the energization duration, the requested number of the multiple addition cycles, and the addition interval, which have been determined in step ST24. In this manner, fuel is intermittently added to the exhaust gas by the fuel adding valve 12L at certain time intervals. The NOx reduction is thus performed by performing the rich spike, in which the atmosphere around each NOx storage reduction catalyst is temporarily held in a state in which the oxygen content is small and the content of unburned fuel component is great. Then, in step ST26, it is determined whether a condition for ending the NOx reduction control is satisfied. Specifically, it is determined whether the amount of the fuel added since starting of the NOx reduction control reaches the NOx reduction fuel addition amount. If the determination is positive, the rich spike is ended and the routine is suspended.

If the determination of step ST22 is negative, indicating that the system for which the NOx reduction needs to be immediately performed corresponds to "the second system", step ST31 is performed. That is, the NOx reduction basic fuel addition amount is calculated using the difference between the actual air-fuel ratio, which is obtained from the detection signal of the air-fuel ratio sensor 23R of the second system, and the target air-fuel ratio. The determined NOx reduction basic fuel addition amount is then multiplied by the bed temperature correction coefficient to obtain the NOx reduction fuel addition amount. The bed temperature correction coefficient is determined with reference to the bed temperature correction coefficient map of Fig. 5, as in the above-described case.

Subsequently, in step ST32, the energization duration (= the fuel adding duration) of the fuel adding valve 12R of the second system, the requested number of multiple addition cycles, and the addition interval (see Fig. 4) are calculated using the NOx reduction fuel addition amount obtained in step ST31. In step ST33, based on the energization duration, the requested number of multiple addition cycles, and the addition interval, which are determined in step ST32, operation of the fuel adding valve 12R of the second system is controlled. In this manner, the fuel is intermittently added to the exhaust gas by the fuel adding valve 12R at certain time intervals. The NOx reduction is thus carried out by performing the rich spike, in which the atmosphere around each NCx storage reduction catalyst is temporarily held in a state in which the oxygen content is small and the content of the unburned fuel component is great. Then, in step ST33, it is determined whether a condition for ending the NOx reduction control is satisfied. Specifically, it is determined whether the amount of the fuel added since starting of the NOx reduction control reaches the NOx reduction fuel addition amount. If positive determination is made, the rich spike is ended and the routine is suspended.

If the NOx reduction needs to be immediately performed for the first system and the second system at the same time in the above-described NOx reduction control, the NOx reduction may be carried out for one of the first system or the second system by priority over the other or for both in parallel. Further, if the PM elimination or the sulfur release needs to be immediately performed at the same time as the NOx reduction control, the PM elimination control or the sulfur release control, for example, is carried out by priority.

### -Other Embodiments-

In the above-described example, the present invention is employed in the V type eight cylinders diesel engine having two exhaust systems. However, the invention is not restricted to this use but may be employed in a diesel engine having any number of cylinders and three or more exhaust systems, such as a diesel engine having a total of four exhaust systems in which two exhaust passages 201L, 202L are provided in the left bank 2L and two exhaust passages 201R, 202R are defined in the right bank 2R as is illustrated in Fig. 6. Also, the invention may be used in an engine other than the V type, for example, in a horizontal opposed type or a straight type. Further, the diesel engine in which the invention is used does not necessarily have to be an in-cylinder direct injection type but may be other types of diesel engines.

In the above examples, the NSR catalysts 17L, 17R and the DPNR catalysts 18L, 18R are arranged in the corresponding exhaust systems. However, an exhaust gas purifying apparatus may be formed by providing an NSR catalyst or an oxidation catalyst and a DPF in each of the exhaust systems.

## Claims

1. A control unit (100) of an exhaust gas purifying apparatus used in an internal combustion engine (1) having a plurality of sets of cylinders (3), wherein different exhaust systems (11L,11R,13L, 13R) are each connected to one of the sets of the cylinders(3), the exhaust gas purifying apparatus comprising a plurality of catalysts (17L, 17R, 18L, 18R) each provided in one of the exhaust systems (11L,11R,13L, 13R) to purify exhaust gas,
and the control unit (100) performs a common PM elimination control or a common sulfur release control on the plurality of catalysts regardless of the states of the catalysts (17L, 17R, 18L, 18R),
wherein, before performing the common PM elimination control or the common sulphur release control, the control unit (100) determines whether a lowest value of the catalyst bed temperatures of the plurality of catalysts (17L, 17R, 18L, 18R) has reached a temperature required for the PM elimination control or the sulphur release control, and wherein, if the lowest value is less than the temperature required for the PM elimination control or the sulphur release control, the control unit (100) switches a combustion state of the engine (1) to a state in which the catalyst bed temperatures of the catalysts (17L, 17R, 18L, 18R) are raised,
wherein the control unit (100) performs the common PM elimination control or the common sulphur release control on all the catalysts (17L, 17R, 18L, 18R) regardless of whether the combustion state of the engine (1) is switched.

2. The control unit (100) according to claim 1, wherein the control unit (100) carries out the PM elimination control using a catalyst of a lowest catalyst bed temperature among the catalysts (17L, 17R, 18L, 18R) as a reference, and wherein the control unit (100) performs the sulfur release control using an average of catalyst bed temperatures of the catalysts (17L, 17R, 18L, 18R).

3. The control unit (100) according to claims 1 or 2, wherein the control unit (100) estimates a PM deposit amount of each of the catalysts (17L, 17R, 18L, 18R) based on an intake air amount, and wherein the control unit (100) determines when the PM elimination control needs to be performed using a catalyst having a greatest value of the estimated PM deposit amounts as a reference.

4. The control unit (100) according to any one of claims 1 to 3, wherein the control unit (100) performs the common PM elimination control or the common sulfur release control by controlling operations of fuel adding valves (12L, 12R) each provided in one of the exhaust systems (11L, 11R, 13L, 13R).

5. A method for controlling an exhaust gas purifying apparatus used in an internal combustion engine (1) having a plurality of sets of cylinders (3), wherein different exhaust systems are each connected to one of the sets of the cylinders, the method comprising:
purifying exhaust gas by means of catalysts (17L, 17R, 18L, 18R) each provided in one of the exhaust systems; and
performing a common PM elimination control or a common sulfur release control on the catalysts (17L, 17R, 18L, 18R) regardless of the states of the catalysts;
before performing the common PM elimination control or the common sulphur release control, determining whether a lowest value of the catalyst bed temperatures of the plurality of catalysts (17L, 17R, 18L, 18R) has reached a temperature required for the PM elimination control or the sulphur release control, and
switching, if the lowest value is less than the temperature required for the PM elimination control or the sulphur release control, a combustion state of the engine (1) to a state in which the catalyst bed temperatures of the catalysts (17L, 17R, 18L, 18R) are raised,
wherein the common PM elimination control or the common sulphur release control is performed on all the catalysts (17L, 17R, 18L, 18R) regardless of whether the combustion state of the engine (1) is switched.

## Patentansprüche

1. Steuereinheit (100) für eine Abgasreinigungsvorrichtung, die in einer Verbrennungskraftmaschine (1) mit mehreren Zylindergruppen (3) verwendet wird, wobei verschiedene Absaugsysteme (11L, 11R, 13L, 13R) jeweils mit einer der Zylindergruppen (3) verbunden sind, wobei die Abgasreinigungsanlage mehrere Katalysatoren (17L, 17R, 18L, 18R) umfaßt, die jeweils in einem der Absaugsysteme (11L, 11R, 13L, 13R) zum Reinigen des Abgases vorgesehen sind,
und die Steuereinheit (100) eine gemeinsame Feststoffteilchen-Beseitigungssteuerung oder eine gemeinsame Schwefelabspaltungssteuerung an den mehreren Katalysatoren unabhängig von den Zuständen der Katalysatoren (17L, 17R, 18L, 18R) ausführt,
wobei die Steuereinheit (100) vor der Ausführung der gemeinsamen Feststoffteilchen-Beseitigungssteuerung oder der gemeinsamen Schwefelabspaltungssteuerung feststellt, ob ein niedrigster Wert der Kontaktbett-Temperaturen der mehreren Katalysatoren (17L, 17R, 18L, 18R) eine für die Feststoffteilchen-Beseitigungssteuerung oder die Schwefelabspaltungssteuerung erforderliche Temperatur erreicht hat, und wobei die Steuereinheit (100) dann, wenn der niedrigste Wert kleiner als die für die Feststoffteilchen-Beseitigungssteuerung oder die Schwefelabspaltungssteuerung erforderliche Temperatur ist, von einem Verbrennungszustand des Motors (1) in einen Zustand umschaltet, in dem die Kontaktbett-Temperaturen der Katalysatoren (17L, 17R, 18L, 18R) ansteigen,
wobei die Steuereinheit (100) die gemeinsame Feststoffteilchen-Beseitigungssteuerung oder die gemeinsame Schwefelabspaltungssteuerung unabhängig davon, ob aus dem Verbrennungszustand des Motors (1) umgeschaltet ist, an allen Katalysatoren (17L, 17R, 18L, 18R) ausführt.

2. Steuereinheit (100) nach Anspruch 1, wobei die Steuereinheit (100) die Feststoffteilchen-Beseitigungssteuerung unter Verwendung eines Katalysators mit einer niedrigsten Kontaktbett-Temperatur unter den Katalysatoren (17L, 17R, 18L, 18R) als Referenzwert ausführt, und wobei die Steuereinheit (100) die Schwefelabspaltungssteuerung unter Verwendung eines Durchschnittswerts der Kontaktbett-Temperaturen der Katalysatoren (17L, 17R, 18L, 18R) ausführt.

3. Steuereinheit (100) nach Anspruch 1 oder 2, wobei die Steuereinheit (100) eine Feststoffteilchen-Abscheidungsmenge an jedem der Katalysatoren (17L, 17R, 18L, 18R) auf der Basis einer Ansaugluftmenge schätzt, und wobei die Steuereinheit (100) unter Verwendung eines Katalysators mit einem größten Wert der geschätzten Feststoffteilchen-Abscheidungsmengen als Referenzwert bestimmt, wann die Feststoffteilchen-Beseitigungssteuerung ausgeführt werden muß.

4. Steuereinheit (100) nach einem der Ansprüche 1 bis 3, wobei die Steuereinheit (100) die gemeinsame Feststoffteilchen-Beseitigungssteuerung oder die gemeinsame Schwefelabspaltungssteuerung durch das Steuern der Funktionsweise von Kraftstoffeingabeventilen (12L, 12R) ausführt, die jeweils in einem der Absaugsysteme (11L, 11R, 13L, 13R) vorgesehen sind.

5. Verfahren zum Steuern einer Abgasreinigungsvorrichtung, die in einer Verbrennungskraftmaschine (1) mit mehreren Zylindergruppen (3) verwendet wird, wobei verschiedene Absaugsysteme jeweils mit einer der Zylindergruppen (3) verbunden sind, wobei das Verfahren folgendes umfaßt:
Reinigen des Abgases mit Hilfe von Katalysatoren (17L, 17R, 18L, 18R), die jeweils in einem der Absaugsysteme vorgesehen sind, und
Ausführen einer gemeinsamen Feststoffteilchen-Beseitigungssteuerung oder einer gemeinsamen Schwefelabspaltungssteuerung an den Katalysatoren unabhängig von den Zuständen der Katalysatoren (17L, 17R, 18L, 18R),
vor der Ausführung der gemeinsamen Feststoffteilchen-Beseitigungssteuerung oder der gemeinsamen Schwefelabspaltungssteuerung die Feststellung, ob ein niedrigster Wert der Kontaktbett-Temperaturen der mehreren Katalysatoren (17L, 17R, 18L, 18R) eine für die Feststoffteilchen-Beseitigungssteuerung oder die Schwefelabspaltungssteuerung erforderliche Temperatur erreicht hat, und
wenn der niedrigste Wert kleiner als die für die Feststoffteilchen-Beseitigungssteuerung oder die Schwefelabspaltungssteuerung erforderliche Temperatur ist, Umschalten von einem Verbrennungszustand des Motors (1) in einen Zustand, in dem die Kontaktbett-Temperaturen der Katalysatoren (17L, 17R, 18L, 18R) ansteigen,
wobei die gemeinsame Feststoffteilchen-Beseitigungssteuerung oder die gemeinsame Schwefelabspaltungssteuerung an allen Katalysatoren (17L, 17R, 18L, 18R) unabhängig davon ausgeführt wird, ob aus dem Verbrennungszustand des Motors (1) umgeschaltet ist.

## Revendications

1. Unité de commande (100) d'un appareil de purification de gaz d'échappement utilisé dans un moteur à combustion interne (1) ayant une pluralité d'ensembles de cylindres (3), dans lequel différents systèmes d'échappement (11L, 11R, 13L, 13R) sont chacun raccordés à l'un des ensembles de cylindres (3), l'appareil de purification de gaz d'échappement comprenant une pluralité de catalyseurs (17L, 17R, 18L, 18R) chacun prévu dans l'un des systèmes d'échappement (11L, 11R, 13L, 13R) pour purifier le gaz d'échappement,
et l'unité de commande (100) réalise une commande commune d'élimination PM ou une commande commune de libération de soufre sur la pluralité de catalyseurs indépendamment des états des catalyseurs (17L, 17R, 18L, 18R),
dans laquelle, avant de réaliser la commande commune d'élimination PM ou la commande commune de libération de soufre, l'unité de commande (100) détermine si la valeur la plus basse des températures de couche catalytique de la pluralité de catalyseurs (17L, 17R, 18L, 18R) a atteint une température requise pour la commande d'élimination PM ou la commande de libération de soufre, et dans laquelle, si la valeur la plus basse est inférieure à la température requise pour la commande d'élimination PM ou la commande de libération de soufre, l'unité de commande (100) fait passer un état de combustion du moteur (1) à un état dans lequel les températures de couche catalytique des catalyseurs (17L, 17R, 18L, 18R) sont augmentées,
dans laquelle l'unité de commande (100) réalise la commande commune d'élimination PM ou la commande commune de libération de soufre sur tous les catalyseurs (17L, 17R, 18L, 18R), sans prise en compte du fait que l'état de combustion du moteur (1) ait été commuté ou non.

2. Unité de commande (100) selon la revendication 1, dans laquelle l'unité de commande (100) réalise la commande d'élimination PM en utilisant un catalyseur de la plus faible température de couche catalytique parmi les catalyseurs (17L, 17R, 18L, 18R) en tant que référence, et dans laquelle l'unité de commande (100) réalise la commande de libération de soufre en utilisant une moyenne des températures de couche catalytique des catalyseurs (17L, 17R, 18L, 18R).

3. Unité de commande (100) selon les revendications 1 ou 2, dans laquelle l'unité de commande (100) estime une quantité de dépôt PM de chacun des catalyseurs (17L, 17R, 18L, 18R) en fonction d'une quantité d'air d'admission, et dans laquelle l'unité de commande (100) détermine le moment où la commande d'élimination PM doit être réalisée en utilisant un catalyseur ayant la valeur la plus importante des quantités de dépôt PM estimées en tant que référence.

4. Unité de commande (100) selon l'une quelconque des revendications 1 à 3, dans laquelle l'unité de commande (100) réalise la commande commune d'élimination PM ou la commande commune de libération de soufre en commandant les fonctionnements de soupapes d'ajout de combustible (12L, 12R), chacune prévue dans l'un des systèmes d'échappement (11L, 11R, 13L, 13R).

5. Procédé pour commander un appareil de purification de gaz d'échappement utilisé dans un moteur à combustion interne (1) ayant une pluralité d'ensembles de cylindres (3), dans lequel différents systèmes d'échappement sont chacun raccordés à l'un des ensembles de cylindres, le procédé comprenant les étapes consistant à :
purifier le gaz d'échappement au moyen de catalyseurs (17L, 17R, 18L, 18R) chacun prévu dans l'un des systèmes d'échappement ; et
réaliser une commande commune d'élimination PM ou une commande commune de libération de soufre sur les catalyseurs (17L, 17R, 18L, 18R) indépendamment des états des catalyseurs,
avant de réaliser la commande commune d'élimination PM ou la commande commune de libération de soufre déterminer si la valeur la plus basse des températures de couche catalytique de la pluralité de catalyseurs (17L, 17R, 18L, 18R) a atteint une température requise pour la commande d'élimination PM ou la commande de libération de soufre, et
faire passer, si la valeur la plus basse est inférieure à la température requise pour la commande d'élimination PM ou la commande de libération de soufre, un état de combustion du moteur (1) à un état dans lequel les températures de couche catalytique des catalyseurs (17L, 17R, 18L, 18R) sont augmentées,
dans lequel la commande commune d'élimination PM ou la commande commune de libération de soufre est réalisée sur tous les catalyseurs (17L, 17R, 18L, 18R) sans prise en compte du fait que l'état de combustion du moteur (1) ait été commuté ou non.
